# EUROPÄISCHE PATENTSCHRIFT

(11) **EP 0 726 413 B1**
(45) Veröffentlichungstag und Bekanntmachung des Hinweises auf die Patenterteilung: **25.11.1998**
(21) Anmeldenummer: 95810092.7
(22) Anmeldetag: 13.02.1995
(51) Int. Cl.: F16K 31/42, F16K 31/40, F16K 39/02

(54) **Eigenmediumbetätigtes Ventil**
Valve actuated by the controlled fluid
Soupape actionnée par le fluide contrôlé

(43) Veröffentlichungstag der Anmeldung: 14.08.1996
(73) Patentinhaber: CCI AG, 8404 Winterthur (CH)
(72) Erfinder: Kälin, Rudolf, CH-8400 Winterthur (CH); Tiefenthaler, Edelbert, CH-8353 Elgg (CH); Thomann, Bruno, CH-8400 Winterthur (CH)
(74) Vertreter: Trieblnig, Adolf

(56) Entgegenhaltungen:
- EP-A- 0 195 206
- CH-A- 395 672
- DE-C- 814 978

## Beschreibung

Die Erfindung betrifft ein eigenmediumbetätigtes, vorsteuerbares Ventil nach dem Oberbegriff des Patentanspruchs 1.

Ein Ventil der genannten Art ist aus der EP-A 0 195 206 bekannt. Dieses Ventil wird häufig zur Steuerung von Sicherheitssystemen, beispielsweise für Dampferzeuger, eingesetzt, wobei das Oeffnungs- und Schliessverhalten, insbesondere die Schnelligkeit, mit der es auf Steuersignale reagiert, von ausschlaggebender Bedeutung ist. Der Ventilkörper des bekannten Ventils ist über einen Elektromagneten zwischen einer Offenstellung und einer Schliessstellung verstellbar. Die bekannte Ausführung ist jedoch für eine differenzierte, kontrollierte Oeffnungs- und/oder Schliessbewegung des Ventilkörpers nicht geeignet.

Der Erfindung liegt die Aufgabe zugrunde, ein insbesondere in dieser Hinsicht weiter entwickeltes Ventil der eingangs genannten Art in einer einfachen Ausführung zu schaffen, welche eine gezielte Beeinflussung der Oeffnungs- und Schliessbewegung des Ventilkörpers, und damit die Verwendung eines derartigen Ventils als Regelventil ermöglicht, durch welches das Druckmedium, z.B. Dampf oder Wasser, von einem hohen Druck auf einen tieferen Druck entspannt werden kann.

Diese Aufgabe wird erfindungsgemäss durch die kennzeichnenden Merkmale des Anspruchs 1 gelöst.

Beim erfindungsgemäss ausgebildeten Ventil ist der als Ausgleichskolben ausgeführte Ventilkörper über den Führungsteil im Sinne einer Folgesteuerung zwischen der Schliessstellung und einer maximalen Offenstellung verstellbar und innerhalb seines Hubbereichs in beliebigen Zwischenstellungen einstellbar. Dabei wird der Ventilkörper in jeder Zwischenstellung nach Art eines Folgekolbens relativ zum Steuerkolben jeweils in einer Ausgleichsstellung gehalten, in welcher die mittlere Teilkammer der Ventilkammer im wesentlichen gegen die erste Teilkammer und gegen die zweite Teilkammer abgeschlossen und damit die Verbindung zwischen der ersten Druckkammer und der zweiten Druckkammer unterbrochen ist. Durch diese Ausführung ist insbesondere eine einfache Regelung des jeweils in der zweiten Druckkammer aufgebauten Drucks erzielbar, der auf die dem ersten Ventilsitz abgewandte Endpartie des Ventilkörpers einwirkt, und der in jeder Zwischenstellung des Ventilkörpers und bei jeder Verstellbewegung des Steuerkolbens, durch eine entsprechende Relativbewegung des Ventilkörpers gegenüber dem Steuerkolben, selbsttätig im Sinne eines Ausgleichs der auf den Ventilkörper einwirkenden Druckkräfte und Strömungskräfte beeinflusst wird. Bei der erfindungsgemässen Ausführung erfordert die Verstellung des Ventilkörpers vorteilhaft geringe Verstellkräfte, die durch einen relativ kleinen, kostengünstigen, universell einsetzbaren Stellantrieb aufgebracht werden können.

Ausgestaltungen der Erfindung sind in den abhängigen Patentansprüchen angegeben.

Weitere Merkmale und Einzelheiten ergeben sich aus der folgenden Beschreibung von in der Zeichnung schematisch dargestellten Ausführungsbeispielen nach der Erfindung. Es zeigen:
- Fig.1: einen Längsschnitt durch ein mit einer Stelleinrichtung versehenes Ventil nach der Erfindung;
- Fig.2: eine Einzelheit des Ventils nach Fig.1 in einer grösseren Darstellung;
- Fig.2a und 2b: die Einzelheit nach Fig.2 je in einer anderen Betriebsstellung und
- Fig.3 und 4: weitere Einzelheiten von Ventilen, je nach einer abgewandelten Ausführungsform.

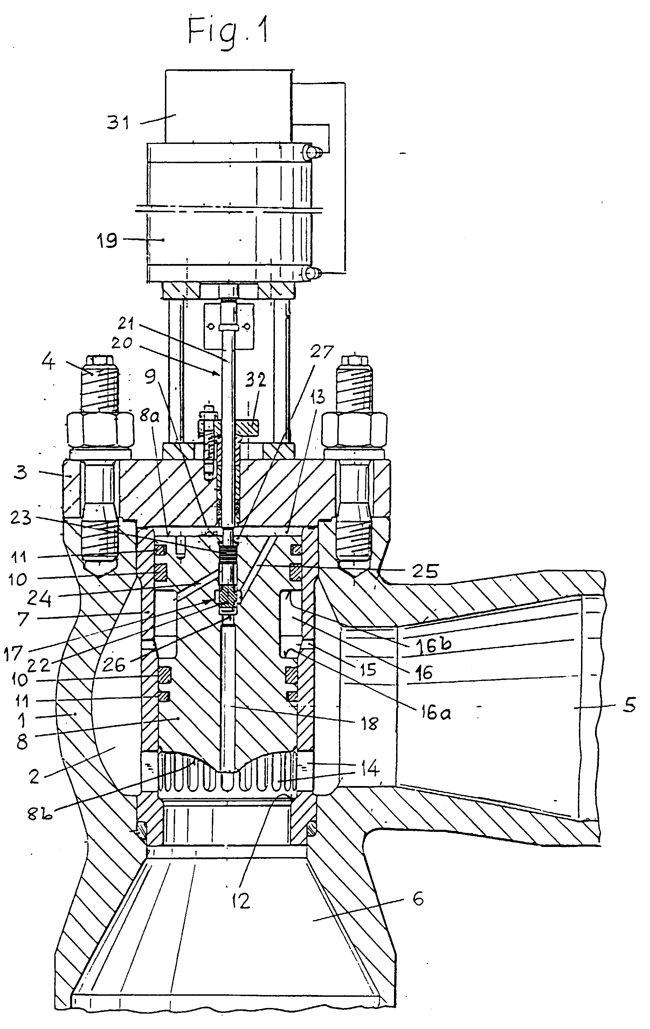

Gemäss Fig.1 weist ein von Dampf als eigenem Druckmedium betätigbares Ventil ein Gehäuse 1 auf, welches eine erste Druckkammer 2 und einen Deckel 3 enthält, der mittels Schrauben 4 an einem Ansatz des Gehäuses 1 befestigt ist. Die Druckkammer 2 ist über einen horizontalen Eintrittsstutzen 5 an eine nicht dargestellte Zuführleitung, und über eine Austrittskammer 6 und einen vertikalen Austrittsstutzen an eine nicht dargestellte Austrittsleitung für das Druckmedium angeschlossen. Im Gehäuse 1 ist eine die Druckkammer 2 durchsetzende Büchse 7 angeordnet, in der ein Ventilkörper 8 mittels Führungsringen 10 und Kolbenringen 11 koaxial zum Austrittsstutzen gleitend geführt ist. In der Büchse 7 ist im Bereich des Uebergangs zwischen der ersten Druckkammer 2 und der Austrittskammer 6 ein ringförmiger, erster Ventilsitz 12 ausgebildet, mit dem der Ventilkörper 8 zusammenwirkt. Der Ventilkörper 8 ist zwischen einer durch den Ventilsitz 12 begrenzten Schliessstellung und einer durch den Deckel 3 begrenzten, maximalen Offenstellung verschiebbar, wobei seine dem Ventilsitz 12 abgewandte Endpartie 8a über einen vorstehenden Anschlagteil 9, darstellungsgemäss einen Schraubenkopf, mit dem Deckel 3 zusammenwirkt und mit diesem und der Wand der Büchse 7 eine stirnseitige zweite Druckkammer 13 begrenzt. Der Ventilkörper 8 ist als Ausgleichskolben ausgebildet, wobei darstellungsgemäss die obere Endpartie 8a mit einer grösseren Kolbenfläche ausgeführt ist als die dem Ventilsitz 12 zugekehrte, untere Endpartie 8b.

Die Büchse 7 ist in einem an den Ventilsitz 12 stromaufwärts anschliessenden Längenabschnitt mit mehreren, über ihren Umfang verteilten Durchtrittsöffnungen für das Druckmedium versehen, die darstellungsgemäss in Form von Schlitzen 14 ausgeführt sind, welche sich über den Hubbereich der mit dem Ventilsitz 12 zusammenwirkenden Endpartie 8b des Ventilkörpers 8 erstrecken. Entsprechend ist bei jeder Hubbewegung eine definierte, kontinuierliche oder stufenweise Veränderung des vom Druckmedium durchströmbaren Ventilquerschnitts erzielbar. In einem mittleren Längenabschnitt der Büchse 7 sind weitere, über deren Umfang verteilte Durchtrittsöffnungen in Form von Bohrungen 15 vorgesehen, welche die erste Druckkammer 2 mit einem am Umfang des Ventilkörpers 8 ausgebildeten, von der Büchse 7 umgebenen Ringraum 16 verbinden, der sich in jeder Hubstellung des Ventilkörpers 8 über die Bohrungen 15 erstreckt, und der somit ständig an die erste Druckkammer 2 angeschlossen ist. Der Ringraum 16 ist gegen die Austrittskammer 6 hin durch eine untere Ringfläche 16a, und gegen die Druckkammer 13 hin durch eine obere, darstellungsgemäss grössere Ringfläche 16b begrenzt, über die auf den Ventilkörper 8 eine nach oben gerichtete Druckkraft einwirkt.

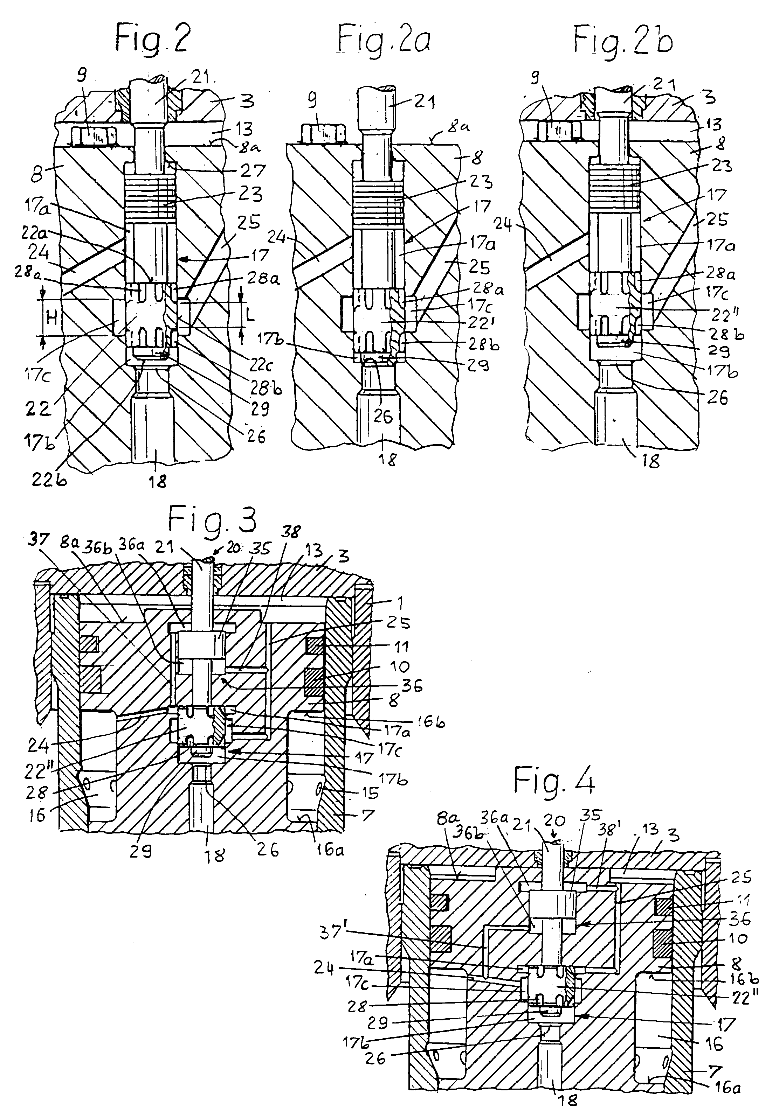

Im Ventilkörper 8 ist eine Ventilkammer 17 ausgebildet, die über eine gegen die untere Endpartie 8b offene axiale Bohrung 18 des Ventilkörpers 8 mit der Austrittskammer 6 des Gehäuses 1 in Verbindung steht. In der Ventilkammer 17 ist ein zum Ventilkörper 8 koaxial verschiebbarer Führungsteil 20 angeordnet, der eine mit einer Betätigungseinrichtung 19 koppelbare Kolbenstange 21 mit einem darauf angeordneten Steuerkolben 22 und einem im Abstand von diesem angeordneten Dichtungskolben 23 enthält, welcher die Ventilkammer 17 gegen die zweite Druckkammer 13 beweglich abdichtet. Wie insbesondere aus den Fig.2, 2a und 2b hervorgeht, wirkt der Steuerkolben 22 mit einem zwischen der Ventilkammer 17 und der Bohrung 18 angeordneten zweiten Ventilsitz 26 zusammen und begrenzt in der Ventilkammer 17 mit seiner der zweiten Druckkammer 13 zugewandten ersten Kolbenfläche 22a eine erste Teilkammer 17a, mit seiner dem zweiten Ventilsitz 26 zugewandten zweiten Kolbenfläche 22b eine zweite Teilkammer 17b und mit seiner Mantelfläche 22c eine mittlere Teilkammer 17c, die in Form einer die Ventilkammer 17 örtlich erweiternden Ringnut ausgeführt ist. Die erste Teilkammer 17a ist über einen ersten Verbindungskanal 24 ständig an den mit der ersten Druckkammer 2 kommunizierenden Ringraum 16 angeschlossen, die zweite Teilkammer 17b ist über die an sie anschliessende Bohrung 18 ständig mit der Austrittskammer 6 des Gehäuses 1 verbunden, während die mittlere Teilkammer 17c über einen zweiten Verbindungskanal 25 ständig an die stirnseitige, zweite Druckkammer 13 angeschlossen ist.

Der Steuerkolben 22 ist in der Ventilkammer 17 zwischen einer durch den zweiten Ventilsitz 26 begrenzten ersten Endlage 22' (Fig.2a), in welcher eine an der Kolbenfläche 22b ausgebildete Aufsetzpartie 29 den Ventilsitz 26 verschliesst, und einer der zweiten Druckkammer 13 näher gelegenen, darstellungsgemäss durch einen Anschlag 27 für den Dichtungskolben 23 begrenzten zweiten Endlage 22'' (Fig.2b) verstellbar geführt. Wie aus den Figuren 2, 2a und 2b weiter hervorgeht, ist der Steuerkolben 22 mit einem der mittleren Teilkammer 17c zugeordneten, an die Wände der ersten Teilkammer 17a und der zweiten Teilkammer 17b dichtend anlegbaren mittleren Längenabschnitt ausgeführt, der beidseitig durch Endabschnitte begrenzt ist, welche je mit Ueberströmkanälen in Form von in axialer Richtung verlaufenden Längsnuten 28a bzw. 28b versehen sind. Der von Längsnuten 28a, 28b freie mittlere Längenabschnitt des Steuerkolbens 22 ist darstellungsgemäss mit einer axialen Abmessung L ausgeführt, welche um ein bestimmtes Unterdeckungsmass kleiner ist als die entsprechende axiale Abmessung H der mittleren Teilkammer 17c. Es ist auch eine Ausführung möglich, bei der der mittlere Kolbenabschnitt und die mittlere Teilkammer 17c zumindest annähernd gleiche axiale Abmessungen L bzw. H aufweisen.

Der Steuerkolben 22 ist über die Betätigungseinrichtung 19 zwischen einer in den Fig.1 und 2 dargestellten, einer geregelten Offenstellung des Ventilkörpers 8 entsprechenden oberen Hubstellung und einer nicht dargestellten, der Schliessstellung des Ventilkörpers 8 entsprechenden untersten Hubstellung verstellbar. In der Schliessstellung des Ventilkörpers 8 nimmt der Steuerkolben 22 die erste Endlage 22' (Fig.2a) ein, in welcher die Längsnuten 28a eine Ueberströmverbindung zwischen den Teilkammern 17a und 17c herstellen und damit eine entsprechend gedrosselte Zufuhr des Druckmediums aus der ersten Druckkammer 2 in die zweite Druckkammer 13 zulassen, in der ein entsprechend verminderter Druck aufgebaut wird. Durch diesen auf die obere Endpartie 8a einwirkenden Druck wird der Ventilkörper 8 mit der unteren Endpartie 8b an den Ventilsitz 12 angepresst.

In der durch den Anschlag am Deckel 3 bestimmten, maximalen Offenstellung des Ventilkörpers 8 nimmt der Steuerkolben 22 die zweite Endlage 22'' (Fig.2b) ein, in welcher die Längsnuten 28a ausserhalb der Teilkammer 17c gehalten werden, die Zufuhr des Druckmediums gesperrt und der zweite Ventilsitz 26 freigegeben wird. Dabei wird durch die Längsnuten 28b eine Ueberströmverbindung zwischen den Teilkammern 17c und 17b und damit zwischen der zweiten Druckkammer 13 und der Austrittskammer 6 hergestellt, so dass das Druckmedium aus der zweiten Druckkammer 13 abströmen kann und der Ventilkörper 8 im wesentlichen durch den auf die untere Endpartie 8b und den auf die obere Ringfläche 16b einwirkenden Druck des Druckmediums in der maximalen Offenstellung gehalten wird.

Entsprechende Überströmverbindungen zwischen den Teilkammern 17c und 17a bzw. 17b können auch auf andere Weise, z.B. durch nicht dargestellte, in den vorgesehenen Überströmbereichen konisch abgeschrägte Endpartien des Steuerkolbens 22, oder durch im Steuerkolben 22 angebrachte Bohrungen gebildet sein, die in der jeweiligen Endlage 22' bzw. 22'' in den Bereich der mittleren Teilkammer 17c gelangen.

Als Betätigungseinrichtung 19 kann eine pneumatische Stellvorrichtung vorgesehen sein, welche einen, z.B. in Abhängigkeit von elektrischen Steuersignalen beeinflussbaren, Regler 31 enthalten kann und über welche der Steuerkolben 22 kontinuierlich oder stufenweise innerhalb des dem Hubbereich des Ventilkörpers 8 entsprechenden Verstellbereichs verstellbar und in beliebigen Zwischenstellungen feststellbar geführt ist. Aufgrund der vorstehend beschriebenen Ausbildung des Steuerkolbens 22 und der Ventilkammer 17 wird der Ventilkörper 8 nach Art eines Folgekolbens vorgesteuert, wobei der Druck in der oberen Druckkammer 13 so geregelt wird, dass auf den Ventilkörper 8 in jeder durch die Einstellung des Steuerkolbens 22 bestimmten Zwischenstellung eine über die obere Endpartie 8a einwirkende Druckkraft ausgeübt wird, welche den über die untere Endpartie 8b und die obere Ringfläche 16b einwirkenden, nach oben gerichteten Druckkräften entspricht.

Der Ventilkörper 8 wird somit jeweils in einer Ausgleichsstellung gemäss Fig.2 gehalten, in welcher die Ventilkammer 17 den Steuerkolben 22 in einer zwischen dessen beiden Endlagen 22' und 22'' sich einstellenden Mittellage aufnimmt, in der die mittlere Teilkammer 17c im wesentlichen durch den mittleren Längenabschnitt des Steuerkolbens 22 verschlossen und von den benachbarten Teilkammern 17a und 17b getrennt ist, so dass die Verbindung zwischen der ersten Druckkammer 2 und der zweiten, oberen Druckkammer 13 unterbrochen ist.Bei der dargestellten Ausführung kann in dieser Ausgleichsstellung zwischen den Teilkammern 17c und 17a bzw. 17b, aufgrund der im Bereich des mittleren Längenabschnitts des Steuerkolbens 22 vorgesehenen, vorstehend erwähnten Unterdeckung gegenüber der mittleren Teilkammer 17c, jeweils eine geringfügige Leckageströmung auftreten, durch welche die Gefahr von durch Verstellen des Ventilkörpers 8 verursachten Druckstössen vermindert werden kann.

Jede Hubbewegung des Steuerkolbens 22 bewirkt eine entsprechende Verstellbewegung des Ventilkörpers 8. Bei einer Verschiebung des Steuerkolbens 22 gegen den Ventilsitz 26 wird die Verbindung zwischen den Teilkammern 17a und 17c und damit zwischen dem Ringraum 16 und der oberen Druckkammer 13 hergestellt. Entsprechend wird in der Druckkammer 13 ein Druck aufgebaut, durch den der Ventilkörper 8 dem Steuerkolben 22 nachgeführt und schliesslich - durch die je gegeneinander wirkenden Druckkräfte und Strömungskräfte - in der Ausgleichsstellung gemäss Fig.2 gehalten wird, in der die Verbindung zwischen den Teilkammern 17a und 17c unterbrochen ist. Bei einer Verschiebung des Steuerkolbens 22 gegen die obere Druckkammer 13 wird die Verbindung zwischen den Teilkammern 17c und 17b und damit zwischen der Druckkammer 13 und der Austrittskammer 6 hergestellt, so dass das Druckmedium aus der Druckkammer 13 verdrängt werden kann und der Ventilkörper 8 in einer entsprechenden Abhebebewegung dem Steuerkolben 22 nachgeführt und schliesslich in der Ausgleichsstellung gehalten wird.

Die Verstellung des Ventilkörpers 8 erfordert vorteilhaft geringe Verstellkräfte, die im wesentlichen aus einer über die zweite (untere) Kolbenfläche 22b auf den Steuerkolben 22 eingeleiteten Spindelauftriebskraft und einer auf die Kolbenstange 21 im Bereich einer im Deckel 3 angeordneten Dichtungsanordnung, darstellungsgemäss einer Stopfbüchse 32, einwirkenden Reibungskraft resultieren. Das erfindungsgemäss ausgeführte Ventil gestattet die Verwendung eines relativ kleinen, kostengünstigen, universell einsetzbaren Stellantriebs, welcher weitgehend unabhängig von dem im Ventil herrschenden Druck, in einer für Ventile mit unterschiedlichen Abmessungen, z.B. mit Ventilsitzdurchmessern von 100 mm bis 500 mm, und unterschiedlichen Anwendungsbereichen geeigneten Ausführung hergestellt werden kann.

In den Ausführungsbeispielen sind einander entsprechende Teile mit gleichen Bezugszeichen versehen. Entsprechend der Darstellung nach den Fig.3 und 4 kann der Führungsteil 20 einen im Abstand vom Steuerkolben 22 angeordneten Servokolben 35 enthalten, der im Ventilkörper 8 in einer von der Ventilkammer 17 abgeschirmten Ausgleichskammer 36 geführt ist und in dieser einen der zweiten Druckkammer 13 zugewandten oberen Zylinderraum 36a und einen dem Steuerkolben 22 zugewandten unteren Zylinderraum 36b begrenzt. Bei der Ausführung nach Fig.3 ist der obere Zylinderraum 36a über einen ersten Kanal 37 an die entsprechend orientierte, mit dem ersten Druckraum 2 verbundene erste Teilkammer 17a des Ventilkörpers 17 angeschlossen, und der untere Zylinderraum 36b ist über einen zweiten Kanal 38 an den die mittlere Teilkammer 17c und die zweite Druckkammer 13 verbindenden zweiten Verbindungskanal 25 angeschlossen. Bei dieser Ausführung wird, wenn der Steuerkolben 22 die dargestellte zweite, obere Endlage 22'' einnimmt, der obere Zylinderraum 36a mit der ersten Druckkammer 2 verbunden, wobei auf den Ventilkörper 8 eine gegen die obere Druckkammer 13 gerichtete Verstellkraft ausgeübt wird, durch welche eine allfällige Blockierung des Ventilkörpers 8, z.B. nach längerem Verharren des Ventilkörpers 8 in der Schliessstellung oder in einer bestimmten mittleren Hubstellung, überwunden und ein sicheres Oeffnen des Ventils gewährleistet werden kann.

Bei der Ausführung nach Fig.4 ist der erste Verbindungskanal 24 an den mittleren Teilraum 17c, und über einen Kanal 37' an den unteren Zylinderraum 36b angeschlossen, während der zweite Verbindungskanal 25 an den oberen Teilraum 17a, und über einen Kanal 38' an den oberen Zylinderraum 36a angeschlossen ist. Entsprechend ist in der dargestellten oberen Endlage 22'' des Steuerkolbens 22 die obere, zweite Druckkammer 13 über den Verbindungskanal 25 an die gegen die mittlere Teilkammer 17c abgeschlossene obere Teilkammer 17a angeschlossen, während die mit der unteren Teilkammer 17b kommunizierende mittlere Teilkammer 17c über den Ringraum 16 an die erste Druckkammer 2, und über die Bohrung 18 an die Austrittskammer 6 angeschlossen ist. Der Ventilkörper 8 wird im wesentlichen durch den in der ersten Druckkammer 2 herrschenden, auf die untere Endpartie 8b und die obere Ringfläche 16b einwirkenden Druck in der dargestellten maximalen Offenstellung gehalten. Wenn der Steuerkolben 22 zur Einleitung einer Schliessbewegung gegen den zweiten Ventilsitz 26 bewegt wird, werden die obere Druckkammer 13 und der obere Zylinderraum 36a über die obere Teilkammer 17a mit der ersten Druckkammer 2 verbunden, wobei der Steuerkolben 22 durch den über den Zylinderraum 36a beaufschlagten Servokolben 35 durch eine zusätzliche Verstellkraft gegen den zweiten Ventilsitz 26 gepresst und damit ein sicheres Schliessen des Ventils gewährleistet wird.

Zusammenfassend lässt sich die Erfindung wie folgt beschreiben:
Das Ventil enthält eine erste Druckkammer 2, eine Austrittskammer 6 und einen mit einem ersten Ventilsitz 12 zusammenwirkenden,als Ausgleichskolben ausgeführten Ventilkörper 8 sowie eine durch diesen begrenzte zweite Druckkammer 13. Der Ventilkörper 8 enthält einen mit einem zweiten Ventilsitz 26 zusammenwirkenden, zwischen einer Schliessstellung und einer Offenstellung beweglichen Steuerkolben 22. Dieser begrenzt in einer Ventilkammer 17 eine dem zweiten Ventilsitz 26 abgewandte, mit der ersten Druckkammer 2 verbundene erste Teilkammer, eine dem zweiten Ventilsitz 26 zugewandte, mit der Austrittskammer 6 verbundene zweite Teilkammer und eine seine Mantelfläche umgebende, mit der zweiten Druckkammer 13 verbundene mittlere Teilkammer. Der Steuerkolben 22 stellt jeweils in der Schliessstellung eine Überströmverbindung zwischen der ersten und der mittleren Teilkammer, und in der Offenstellung eine Überströmverbindung zwischen der zweiten und der mittleren Teilkammer her. Der Ventilkörper 8 stellt sich jeweils nach Art eines Folgekolbens bezüglich des über eine regelbare Stellvorrichtung 19 antreibbaren Steuerkolbens 22 ein, und ist über diesen zwischen dem ersten Ventilsitz 12 und unterschiedlichen Offenstellungen kontrolliert verstellbar.

Anstelle der dargestellten pneumatischen Stellvorrichtung 19 kann auch eine andere, z. B.hydraulische oder elektromechanische Betätigungsvorrichtung vorgesehen sein.

## Patentansprüche

1. Eigenmediumbetätigtes, vorsteuerbares Ventil mit einem von einem Druckmedium durchströmbaren Gehäuse, welches eine erste Druckkammer (2), eine Austrittskammer (6) und einen ersten Ventilsitz (12) aufweist und einen mit diesem zusammenwirkenden Ventilkörper (8) sowie eine zweite Druckkammer (13) enthält, die durch eine dem Ventilsitz (12) abgewandte Kolbenfläche (8a) des Ventilkörpers (8) begrenzt ist, wobei der Ventilkörper (8) eine Ventilkammer (17) mit einem zweiten Ventilsitz (26) aufweist und einen mit diesem zusammenwirkenden, durch Antriebsmittel antreibbaren Steuerkolben (22) enthält, welcher zwischen einer Schliessstellung (22'), und einer Offenstellung (22'') beweglich geführt ist,
dadurch gekennzeichnet, dass der Ventilkörper (8) als Ausgleichskolben ausgeführt ist, dass der Steuerkolben (22) in der Ventilkammer (17) eine dem zweiten Ventilsitz (26) abgewandte, mit einer der Druckkammern (2 oder 13) verbundene erste Teilkammer (17a) und eine dem zweiten Ventilsitz (26) zugewandte, mit der Austrittskammer (6) verbundene zweite Teilkammer (17b) sowie eine seine Mantelfläche (22c) umgebende, mit der anderen Druckkammer (13 bzw. 2) verbundene mittlere Teilkammer (17c) begrenzt, und dass jeweils in der Schliessstellung (22') des Steuerkolbens (22) eine Ueberströmverbindung zwischen der ersten Teilkammer (17a) und der mittleren Teilkammer (17c), und in der Offenstellung (22'') eine Überströmverbindung zwischen der zweiten Teilkammer (17b) und der mittleren Teilkammer (17c) besteht.

2. Ventil nach Anspruch 1, dadurch gekennzeichnet, dass die Überströmverbindungen durch am Steuerkolben (22) vorgesehene Überströmkanäle gebildet sind.

3. Ventil nach Anspruch 2, dadurch gekennzeichnet, dass der Steuerkolben (22) mit einem zum Zusammenwirken mit der ersten (17a) und der zweiten Teilkammer (17b) bestimmten, an deren Wände dichtend anlegbaren mittleren Kolbenabschnitt ausgeführt ist, der beidseitig durch Endabschnitte begrenzt ist, in denen die zum Zusammenwirken mit der mittleren Teilkammer (17c) bestimmten Ueberströmkanäle in Form von im wesentlichen in axialer Richtung verlaufenden Nuten (28a, 28b) ausgeführt sind.

4. Ventil nach Anspruch 3, dadurch gekennzeichnet, dass der mittlere Kolbenabschnitt mit einer axialen Abmessung (L) ausgeführt ist, die kleiner ist als die entsprechende axiale Abmessung (H) der mittleren Teilkammer (17c).

5. Ventil nach einem der vorangehenden Ansprüche, dadurch gekennzeichnet, dass der Ventilkörper (8) in einer die erste Druckkammer (2) des Gehäuses durchsetzenden Büchse (7) geführt ist, welche den ersten Ventilsitz (12) enthält und welche in einem an diesen anschliessenden Längenabschnitt, der einem vorbestimmten Hubbereich des Ventilkörpers (8) entspricht, sowie im Bereich eines am Ventilkörper (8) ausgebildeten, mit der Ventilkammer (17) kommunizierenden Ringraums (16) mit Durchtrittsöffnungen (14, 15) für das Druckmedium ausgeführt ist.

6. Ventil nach einem der vorangehenden Ansprüche, dadurch gekennzeichnet, dass der Steuerkolben (22) mit einem Servokolben (35) gekoppelt ist, welcher in einer von der Ventilkammer (17) abgeschirmten Ausgleichskammer (36) des Ventilkörpers (8) geführt ist und in dieser zwei Zylinderräume (36a, 36b) begrenzt, von denen der eine mit der ersten Druckkammer (2) des Gehäuses, und der andere mit der zweiten Druckkammer (13) in Verbindung steht.

7. Ventil nach Anspruch 6, dadurch gekennzeichnet, dass je einer der Zylinderräume (36a und 36b) der Ausgleichskammer (36) und je eine der Teilkammern (17a bzw. 17b) der Ventilkammer (17) über einen gemeinsamen Verbindungskanal (24 bzw. 25) an die zugeordnete Druckkammer (2 bzw. 13) angeschlossen sind.

8. Ventil nach einem der vorangehenden Ansprüche, dadurch gekennzeichnet, dass die erste Teilkammer (17a) des Ventilkörpers (8) über einen ersten Verbindungskanal (24) an die erste Druckkammer (2) des Gehäuses angeschlossen ist, und dass die mittlere Teilkammer (17c) über einen zweiten Verbindungskanal (25) an die zweite Druckkammer (13) angeschlossen ist.

9. Ventil nach einem der Ansprüche 1 bis 7, dadurch gekennzeichnet, dass die mittlere Teilkammer (17c) des Ventilkörpers (8) über einen ersten Verbindungskanal (24) an die erste Druckkammer (2) des Gehäuses angeschlossen ist, und dass die erste Teilkammer (17a) über einen zweiten Verbindungskanal (25) an die zweite Druckkammer (13) angeschlossen ist.

10. Ventil nach einem der vorangehenden Ansprüche, dadurch gekennzeichnet, dass als Antriebsmittel für den Steuerkolben (22) eine regelbare Betätigungseinrichtung (19) vorgesehen ist, über welche der Steuerkolben (22) innerhalb einer definierten Hublänge, die dem Hubbereich des Ventilkörpers (8) entspricht, verstellbar und in mindestens einer Zwischenstellung feststellbar gehalten ist.

11. Ventil nach Anspruch 10, dadurch gekennzeichnet, dass die Betätigungseinrichtung (19) eine pneumatische Stellvorrichtung enthält.

12. Ventil nach Anspruch 10 oder 11, dadurch gekennzeichnet, dass die Betätigungseinrichtung (19) an einen in Abhängigkeit von elektrischen Steuersignalen beeinflussbaren Regler (31) angeschlossen und über diesen stufenweise verstellbar ist.

13. Verwendung eines Ventils nach einem der vorangehenden Ansprüche als verstellbares Regelventil zum Entspannen eines Druckmediums, z.B. Dampf und/oder Wasser, von einem hohen Druck auf einen tieferen Druck.

## Claims

1. A piloted valve actuated by internal medium, having a housing through which a pressure medium can flow, which comprises a first pressure chamber (2), a delivery chamber (6) and a first valve seat (12) and contains a valve body (8) cooperating therewith and also a second pressure chamber (13), which is limited by a piston face (8a) of the valve body (8) faced away from the valve seat (12), wherein the valve body (8) comprises a valve chamber (17) having a second valve seat (26) and a sliding piston (22) which cooperates therewith and can be driven by a driving means, which is movably guided being a closed position (22') and an open position (22''),
**characterised in that** the valve body (8) is designed as a compensating piston,
**in that** the sliding piston (22) in the valve chamber (17) limits a first sub-chamber (17a) remote from the second valve seat (26) and connected to one of the pressure chambers (2 or 13) and a second sub-chamber (17b) faced towards the second valve seat (26) and connected to the delivery chamber (6) and also a middle sub-chamber (17c) surrounding its shell surface (22c) and connected to the other pressure chambers (13 and 2 respectively),
**and in that** in each case in the closed position (22') of the sliding piston (22) a relief connection exists between the first sub-chamber (17a) and the middle sub-chamber (17c), and in the open position (22'') a relief connection exists between the second sub-chamber (17b) and the middle sub-chamber (17c).

2. A valve according to Claim 1,
**characterised in that** the relief connections are formed by relief ducts provided on the sliding piston (22).

3. A valve according to Claim 2,
**characterised in that** the sliding piston (22) is constructed with a middle piston portion which is intended to interact with the first (17a) and the second sub-chamber (17b) and can be placed tightly against their walls, and which is limited at either side by end portions, in which the relief ducts intended to interact with the middle sub-chamber (17c) are designed in the form of grooves (28a, 28b) substantially extending in the axial direction.

4. A valve according to Claim 3,
**characterised in that** the middle piston portion is designed with an axial dimension (L) which is less that the corresponding axial dimension (H) of the middle sub-chamber (17c).

5. A valve according to one of the preceding Claims,
**characterised in that** the valve body (8) is guided in a sleeve (7) passing through the first pressure chamber (2) of the housing, which sleeve contains the first valve seat (12) and which in a longitudinal portion connected thereto, which corresponds to a predetermined stroke region of the valve body (8), and also in the region of an annular space (16) constructed on the valve body (8) and communicating with the valve chamber (17) is designed with flow apertures (14, 15) for the pressure medium.

6. A valve according to one of the preceding Claims,
**characterised in that** the sliding piston (22) is coupled with a servopiston (35), which is guided in a compensating chamber (36) of the valve body (8) shielded from the valve chamber (17) and in said chamber limits two cylinder chambers (36a, 36b), the one of which communicates with the first pressure chamber (2) of the housing, and the other of which communicates with the second pressure chamber (13).

7. A valve according to Claim 6,
**characterised in that** each one of the cylinder chambers (36a and 36b) of the compensating chamber (36) and each one of the sub-chambers (17a and 17b respectively) of the valve chamber (17) are connected via a common connecting duct (24 and 25 respectively) to the associated pressure chamber (2 and 13 respectively).

8. A valve according to one of the preceding Claims,
**characterised in that** the first sub-chamber (17a) of the valve body (8) is connected to the first pressure chamber (2) of the housing via a first connecting duct (24),
**and in that** the middle sub-chamber (17c) is connected to the second pressure chamber (13) via a second connecting duct (25).

9. A valve according to one of Claims 1 to 7,
**characterised in that** the middle sub-chamber (17c) of the valve body (8) is connected to the first pressure chamber (2) of the housing via a first connecting duct (24),
**and in that** the first sub-chamber (17a) is connected to the second pressure chamber (13) via a second connecting duct (25).

10. A valve according to one of the preceding Claims,
**characterised in that** provided as driving means for the sliding piston (22) is a controllable actuator (19), via which the sliding piston (22) is adjustably retained inside a defined stroke length corresponding to the stroke region of the valve body (8) and fixedly retained in at least one intermediate position.

11. A valve according to Claim 10,
**characterised in that** the actuator device (19) contains a pneumatic regulating device.

12. A valve according to Claim 10 or 11,
**characterised in that** the actuator (19) is connected to a controller (31) which can be influenced in dependence on electric control signals and can be gradually adjusted via said controller.

13. Use of a valve as specified by one of the preceding Claims as an adjustable control valve to relieve a pressure medium, e.g. steam and/or water, from a high pressure to a lower pressure.

## Revendications

1. Soupape actionnée par le fluide contrôlé, à commande pilote, avec un boîtier traversé par le fluide sous pression qui présente une première chambre de pression (2), une chambre de sortie (6) et un premier siège de soupape (12) et un corps de soupape (8) coopérant avec celui-ci ainsi qu'une deuxième chambre de pression (13) qui est délimitée par une surface de piston (8a) éloignée du siège de soupape (12) du corps de soupape (8), où le corps de soupape (8) présente une chambre de soupape (17) avec un deuxième siège de soupape (26) et comporte un piston de commande (22) coopérant avec celui-ci, pouvant être entraîné par des moyens d'entraînement, qui est guidé d'une manière mobile entre une position de fermeture (22') et une position d'ouverture (22"), caractérisée en ce que le corps de soupape (8) est réalisé sous forme de piston d'égalisation, que le piston de commande (221) délimite dans la chambre de soupape (17) une première chambre partielle (17a) éloignée du deuxième siège de soupape (26), reliée à l'une des chambres de pression (2 ou 13) et une deuxième chambre partielle (17b) orientée vers le deuxième siège de soupape (26), reliée à la chambre de sortie (6) ainsi qu'une chambre partielle médiane (17c) entourant sa surface d'enveloppe (22c), reliée à l'autre chambre de pression (13 respectivement 2) et en ce que respectivement dans la position de fermeture (22') du piston de commande (22) il existe une liaison de débordement entre la première chambre partielle (17a) et la chambre partielle médiane (17c), et dans la position d'ouverture (22") une liaison de débordement entre la deuxième chambre partielle (17b) et la chambre partielle médiane (17c).

2. Soupape selon la revendication 1, caractérisée en ce que les liaisons de débordement sont formées par des canaux de débordement prévus au piston de commande (22).

3. Soupape selon la revendication 2, caractérisée en ce que le piston de commande (22) est réalisé avec un tronçon de piston médian prévu pour coopérer avec la première (17a) et la deuxième chambre partielle (17b), applicable d'une manière étanche aux parois de celles-ci, et qui est délimité des deux côtés par des tronçons d'extrémité dans lesquels sont réalisés les canaux de débordement prévus pour coopérer avec la chambre partielle médiane (17c) sous la forme de rainures (28a, 28b) s'étendant essentiellement dans la direction axiale.

4. Soupape selon la revendication 3, caractérisée en ce que le tronçon de piston médian est réalisé avec une dimension axiale (L) qui est plus petite que la dimension axiale correspondante (H) de la chambre partielle médiane (17c).

5. Soupape selon l'une des revendications précédentes, caractérisée en ce que le corps de soupape (8) est guidé dans une douille (7) traversant la première chambre de pression (2) du boîtier qui comporte le premier siège de soupape (12) et qui est réalisée dans un tronçon longitudinal faisant suite à celui-ci qui correspond à une zone de course prédéterminée du corps de soupape (8) ainsi qu'au voisinage d'une enceinte annulaire (16) réalisée au corps de soupape (8), communiquant avec la chambre de soupape (17) avec des ouvertures traversantes (14, 15) pour le fluide sous pression.

6. Soupape selon l'une des revendications précédentes, caractérisée en ce que le piston de commande (22) est accouplé à un piston d'asservissement (35) qui est guidé dans une chambre d'égalisation (36) du corps de soupape (8) protégée contre la chambre de soupape (17) et délimite dans celle-ci deux enceintes cylindriques (36a, 36b) dont l'une est en liaison avec la première chambre de pression (2) du boîtier et l'autre avec la deuxième chambre de pression (13).

7. Soupape selon la revendication 6, caractérisée en ce que respectivement l'une des enceintes cylindriques (36a et 36b) de la chambre d'égalisation (36) et respectivement l'une des chambres partielles (17a respectivement 17b) de la chambre de soupape (17) sont raccordées par un canal de liaison commun (24 respectivement 25) à la chambre de pression associée (2 respectivement 13).

8. Soupape selon l'une des revendications précédentes, caractérisée en ce que la première chambre partielle (17a) du corps de soupape (8) est raccordée par un premier canal de liaison (24) à la première chambre de pression (2) du boîtier, et en ce que la chambre partielle médiane (17c) est raccordée par un deuxième canal de liaison (25) à la deuxième chambre de pression (13).

9. Soupape selon l'une des revendications 1 à 7, caractérisée en ce que la chambre partielle médiane (17c) du corps de soupape (8) est raccordée par un premier canal de liaison (24)à la première chambre de pression (2) du boîtier et en ce que la première chambre partielle (17a) est raccordée par un deuxième canal de liaison (25) à la deuxième chambre de pression (13).

10. Soupape selon l'une des revendications précédentes, caractérisée en ce qu'il est prévu comme moyen d'entraînement pour le piston de commande (22) un dispositif d'actionnement réglable (19) par lequel le piston de commande (22) est déplaçable à l'intérieur d'une longueur de course définie qui correspond à la zone de course du corps de soupape (8) et peut être fixé dans au moins une position intermédiaire.

11. Soupape selon la revendication 10, caractérisée en ce que le dispositif d'actionnement (19) comporte un dispositif de positionnement pneumatique.

12. Soupape selon la revendication 10 ou 11, caractérisée en ce que le dispositif d'actionnement (19) est relié à un régulateur (31) réagissant à des signaux de commande électriques et est ajustable par celui-ci par étapes.

13. Utilisation d'une soupape selon l'une des revendications précédentes comme soupape de réglage ajustable pour détendre un fluide sous pression, par exemple de la vapeur et/ou de l'eau, d'une pression élevée à une pression plus basse.
